# NEUE EUROPÄISCHE PATENTSCHRIFT

(11) **EP 1 772 349 B2**
(45) Veröffentlichungstag und Bekanntmachung des Hinweises auf die Entscheidung über den Einspruch: **13.04.2022**
(45) Hinweis auf die Patenterteilung: 03.06.2009
(21) Anmeldenummer: 06117927.1
(22) Anmeldetag: 27.07.2006
(51) Int. Cl.: B62D 5/04

(54) **Verfahren zum Betreiben einer elektrischen Hilfskraftlenkung**
Method for operating an electrical power steering
Procédé de contrôle pour un dispositif de direction assistée électrique

(30) Priorität: 06.10.2005 DE 102005047935
(43) Veröffentlichungstag der Anmeldung: 11.04.2007
(73) Patentinhaber: Robert Bosch Automotive Steering GmbH, 73527 Schwäbisch Gmünd (DE)
(72) Erfinder: Heilig, Arnulf, 73529 Schwäbisch Gmünd (DE); Hasenclever, John, 71409 Schwaikheim (DE)
(74) Vertreter: Lorenz, Markus

(56) Entgegenhaltungen:
- WO-A-2005/063547
- DE-A1- 3 821 789
- DE-A1- 10 128 068
- DE-A1- 10 261 001
- DE-A1- 10 332 023
- US-A- 4 785 901
- US-B2- 6 848 324

## Beschreibung

Die Erfindung betrifft ein Verfahren zum Betreiben einer elektrischen Hilfskraftlenkung bei einem Kraftfahrzeug nach der im Oberbegriff von Anspruch 1 näher definierten Art.

Aus der DE 102 61 001 A1 ist ein Verfahren zum Lenken eines Kraftfahrzeugs mit einer Servolenkvorrichtung beschrieben, bei welcher der Grad der durch sie geleisteten Lenkunterstützung für den Fahrer einstellbar ist. Um eine drohende Gefahrensituation für die Reifen des Kraftfahrzeugs in der Form, dass mindestens einer der Reifen beziehungsweise das Rad des Kraftfahrzeugs an ein Hindernis anstößt, zu erkennen, wird überprüft, ob ein Lenkmoment an einem Rad des Kraftfahrzeugs größer oder gleich einem vorgegebenen Schwellenlenkmoment ist und/oder, ob eine Kraft auf ein Lenkgestänge größer oder gleich einer vorgebbaren Schwellen kraft ist und/oder, ob der Fahrer versucht, das Lenkrad weiter einzuschlagen, obwohl die Änderungsgeschwindigkeit des Einschlagwinkels bereits gegen null geht. Wenn mindestens eine dieser drei Bedingungen erfüllt ist, wird darauf geschlossen, dass mindestens ein Rad des Kraftfahrzeugs an ein Hindernis stößt.

DE 38 21 789 A1 betrifft eine gattungsgemäße motorgetriebene Servolenkungseinheit mit einem Elektromotor zum Erzeugen einer Hilfslenkkraft in einem Lenksystem, das ein Lenkrad an Fahrzeugräder koppelt, wobei die Lenkungseinheit die Drehung des Lenkrads durch Steuerung eines dem Motor zuzuführenden elektrischen Stroms auf der Basis einer Lenkinformation unterstützt. Diese Lenkungseinheit umfasst eine Lenkkraft-Erfassungseinrichtung zum Erfassen der in dem Lenksystem erzeugten Lenkkraft und eine Überlastungsverhinderungseinrichtung zum Herabsetzen des elektrischen Stroms, wenn die erfasste Lenkkraft einen vorbestimmten Wert überschreitet.

In DE 102 61 001 A1 ist ein Verfahren zum Lenken eines Kraftfahrzeugs mit einer Servolenkvorrichtung angegeben, über welche der Grad der durch sie geleisteten Lenkunterstützung für den Fahrer einstellbar ist. Damit eine drohende Gefahrensituation für die Reifen des Kraftfahrzeugs in der Form, dass mindestens einer der Reifen bzw. das Rad des Kraftfahrzeugs an ein Hindernis anstößt, erkannt wird, wird vorgeschlagen zu überprüfen, ob ein Lenkmoment an einem Rad des Kraftfahrzeugs größer oder gleich einem vorgegebenen Schwellenlenkmoment ist, und/oder zu prüfen, ob eine Kraft auf ein Lenkgestänge größer oder gleich einer vorgebbaren Schwellenkraft ist und/oder ob der Fahrer versucht, das Lenkrad weiter einzuschlagen, obwohl die Änderungsgeschwindigkeit des Einschlagwinkels bereits gegen Null geht. Wenn mindestens eine dieser drei Bedingungen erfüllt ist, wird darauf geschlossen, dass mindestens ein Rad des Kraftfahrzeugs an ein Hindernis stößt.

In der US 4,785,901 ist ein Lenkhilfe-Mechanismus, insbesondere für Zahnstangenlenkungen, mit elektrischem Antrieb beschrieben, welcher einen elektronischen Steuerkreis aufweist, der derart ausgelegt ist, den an den kraftunterstützenden Motor anzulegenden Motor-Ansteuerstrom in Abhängigkeit von einer Lenkbelastungs- und/oder Fahrzeuggeschwindigkeitscharakteristik zu steuern. Des weiteren weist der Lenkhilfe-Mechanismus einen Annäherungsfühler auf, der dazu ausgelegt ist, während einer Lenkbewegung die Stellungen in der Nähe der Enden eines Lenkhubbereichs zu ermitteln und eine Vorrichtung, die den Motor-Ansteuerstrom entsprechend auf das vom Annäherungsfühler ermittelte Signal mit einer Reduzier-Charakteristik behaftet.

In der WO 2005/063547 A1 ist bei einem Verfahren zum Lenken eines Fahrzeugs mit einem Überlagerungslenksystem, bei dem ein vom Fahrer eingegebener Lenkwinkel und ein weiterer Winkel (Zusatzlenkwinkel) ermittelt werden, und bei dem nach Maßgabe des eingegebenen Lenkwinkels und des Zusatzlenkwinkels mittels eines Überlagerungsaktuators ein resultierender Lenkwinkel eingestellt wird, vorgesehen, dass durch eine Sicherheitsmodul eine nicht gewünschte Stellbewegung des Überlagerungsaktuators durch ein (äußeres) Lastmoment verhindert wird.

Um ein nur kurzzeitiges Überschreiten des festgelegten maximalen manuellen Lenkmoments nicht zu berücksichtigen und eine zu starke Reaktion der elektrischen Hilfskraftlenkung gegenüber dem Fahrer zu vermeiden, ist erfindungsgemäß vorgesehen, dass die Reduzierung der elektrischen Lenkunterstützung mit einer zeitlichen Verzögerung erfolgt. Diese kann sich beispielsweise in einem Bereich von 1 Sekunde bewegen.

Prinzipiell wird bei jeder elektrisch unterstützten Lenkung der Missbrauchsfall des sogenannten "Bordsteinabdrückens" durchgeführt, da allgemein angenommen wird, dass dieser Fall über die Lebensdauer eines Kraftfahrzeugs tatsächlich auftreten kann. Bei dem Versuch, der bei Stillstand des Kraftfahrzeugs stattfindet, erhöht der Fahrer das manuelle Lenkmoment, das auch als Lenkradmoment bezeichnet wird, langsam bis auf 110 Nm, wobei sich das am Bordstein geparkte Fahrzeug von demselben abdrückt. Bei einem Lenkradmoment von 110 Nm wird ein unter anderem von der Fahrbahn und dem Fahrzeug abhängiger Lenkwinkel erreicht, der im allgemeinen nicht dem maximalen Lenkradeinschlag entspricht.

Bei den genannten Umständen kann es zu einer Überlastung der mechanischen Bauteile im Kraftfluss zwischen der Lenkhandhabe und den durch dieselbe gelenkten Rädern kommen, wodurch sich plastische Verformungen, Risse und Brüche insbesondere an der Zahnstange der Lenkung ergeben können. Diese Beschädigungen der Zahnstange ergeben sich aus den bei diesem Versuch auftretenden Querkräften auf dieses Bauteil, die sehr viel höher sind als die im Fahrbetrieb auftretenden Kräfte. Diese hohen Querkräfte wiederum entstehen durch die hohe Axialkraft auf die Zahnstange und die veränderten kinematischen Winkel der Spurstangen. In dem beschriebenen Überlastfall ist die axiale Zahnstangenkraft die Summe aus der über die Lenkhandhabe aufgebrachten Kraft, welche mechanisch auf die Zahnstange übertragen wird, und der maximalen Lenkunterstützungskraft durch den Elektromotor, da dieser ab einem manuellen Lenkmoment von 8 bis 10 Newtonmeter und somit auch in diesem Missbrauchsfall die maximale Lenkunterstützung erzeugt.

Es ist daher Aufgabe der vorliegenden Erfindung, ein Verfahren zum Betreiben einer elektrischen Hilfskraftlenkung zu schaffen, welches auch bei einer stark erhöhten manuellen Lenkkraft eine Beschädigung der mechanischen Bauteile der Lenkung verhindert. Das Verfahren sollte im normalen Betrieb des Kraftfahrzeugs möglichst unauffällig sein und die gewünschte Unterstützung für den Fahrer nicht behindern.

Erfindungsgemäß wird diese Aufgabe durch die in Anspruch 1 genannten Merkmale gelöst.

Durch das erfindungsgemäße Verfahren wird in dem Missbrauchsfall "Bordsteinabdrücken" verhindert, dass zu der hohen manuell aufgebrachten Kraft auch noch die Unterstützung durch den Elektromotor hinzukommt, wodurch das maximale Lenkmoment erheblich eingeschränkt wird und Beschädigungen von mechanischen Teilen der Lenkung verhindert werden. Das erfindungsgemäße Verfahren kann in sehr einfacher und insbesondere kostengünstiger Art und Weise durchgeführt werden, da lediglich softwaremäßige Änderungen erforderlich sind und an der Hilfskraftlenkung an sich nichts verändert werden muss.

Durch zusätzliche Bedingungen wird die Wahrscheinlichkeit, dass die Lenkunterstützung in einem unerwünschten Fall reduziert wird, verringert. Indem das Verfahren nur im stehenden Zustand des Kraftfahrzeugs durchgeführt wird und es nur durchgeführt wird, wenn die Lenkgeschwindigkeit geringer als ein einstellbarer Wert ist.

Aus Komfortgründen erfolgt das Reduzieren der Lenkunterstützung durch den Elektromotor mit einer zeitlichen Verzögerung .

Des weiteren kann in einer Ausgestaltung des erfindungsgemäßen Verfahrens vorgesehen sein, dass das manuelle Lenkmoment, bei dessen Überschreiten die elektrische Lenkunterstützung reduziert wird, zwischen 5 und 15 Nm beträgt. Hierdurch ist es nicht erforderlich, das auf die Lenkhandhabe aufgebrachte Handmoment über den gesamten Wertebereich zu erfassen, wodurch auf bereits vorhandene Sensoren zurückgegriffen werden kann.

Eine weitere Ausführung ist den Merkmalen von Anspruch 2 zu entnehmen.

Da im Missbrauchsfall "Bordsteinabdrücken" im allgemeinen nicht die Endposition und damit nicht der maximale Lenkwinkel der Lenkung erreicht wird, steht, wenn der Fahrer ein Handmoment von 110 Nm auf die Lenkhandhabe aufbringt, auch nicht die volle Lenkunterstützung zur Verfügung. Dadurch kann die auf die Zahnstange aufgebrachte Kraft nicht das volle Niveau erreichen.

Nachfolgend ist ein Ausführungsbeispiel der Erfindung anhand der Zeichnung prinzipmäßig beschrieben.

Es zeigt:
Fig. 1 einen Teil eines Kraftfahrzeugs mit einer elektrischen Hilfskraftlenkung, wobei sich die Räder des Kraftfahrzeugs in einem ersten Zustand befinden; und
Fig. 2 den Teil des Kraftfahrzeugs aus Fig. 1 mit einer elektrischen Hilfskraftlenkung, wobei sich die Räder des Kraftfahrzeugs in einem zweiten Zustand befinden.

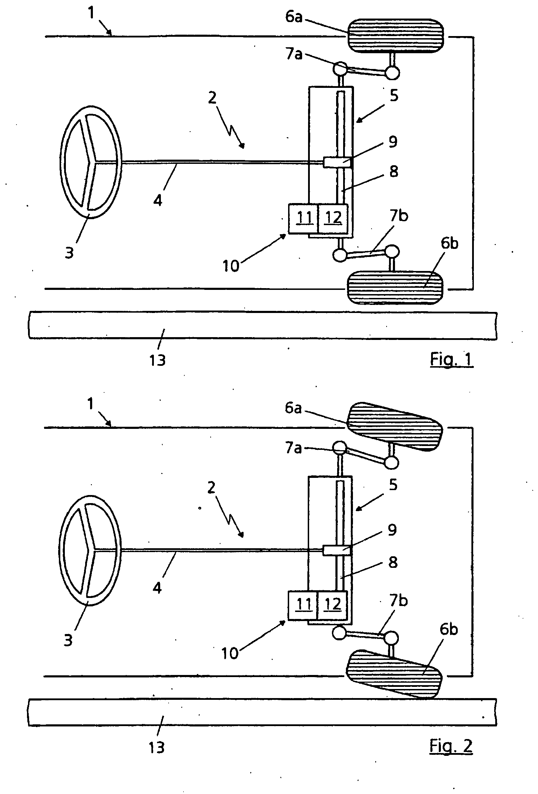

Fig. 1 zeigt einen Teil eines Kraftfahrzeugs 1, welches eine elektrische Hilfskraftlenkung 2 aufweist. Die sehr vereinfacht dargestellte elektrische Hilfskraftlenkung 2 wiederum weist eine im vorliegenden Fall als Lenkrad ausgebildete Lenkhandhabe 3 auf, welche über eine Lenksäule 4 mit einem Lenkgetriebe 5 verbunden ist. Das Lenkgetriebe 5 dient in an sich bekannter Weise dazu, einen Drehwinkel der Lenksäule 4 in einen Lenkwinkel von lenkbaren Rädern 6a und 6b des Kraftfahrzeugs 1 umzusetzen. Hierzu weist das Lenkgetriebe 5 eine über jeweilige Spurstangen 7a und 7b mit den Rädern 6a und 6b verbundene Zahnstange 8 und ein Ritzel 9 auf, an welches die Lenksäule 4 angreift.

Zur Unterstützung der von einem nicht dargestellten Fahrer des Kraftfahrzeugs 1 auf die Lenkhandhabe 3 aufgebrachten Kraft beziehungsweise dem sogenannten manuellen Lenkmoment weist die elektrische Hilfskraftlenkung 2 einen elektrischen Servoantrieb 10 auf, welcher wiederum einen Elektromotor 11 und ein Riemengetriebe 12 aufweist, welches zum Beispiel über ein nicht dargestelltes Kugelumlaufgetriebe mit der Zahnstange 8 der elektrischen Hilfskraftlenkung 2 verbunden ist. Prinzipiell spielt es jedoch keine Rolle, wie das manuelle Lenkmoment durch den Elektromotor 11 unterstützt wird.

Da die weiteren Bauteile der elektrischen Hilfskraftlenkung 2, wie zum Beispiel ein Steuergerät für den elektrischen Servoantrieb 10, für das nachfolgend beschriebene Verfahren keine wesentliche Rolle spielen, sind sie weder in den Figuren dargestellt noch wird nachfolgend auf sie eingegangen.

In dem in Fig. 1 dargestellten Zustand der Hilfskraftlenkung 2 befinden sich die beiden Räder 6a und 6b in der Mitte, d.h. sie sind nicht ausgelenkt. Das dem Fahrbahnrand zugewandte, rechte Rad 6b weist einen geringen Abstand von einem Bordstein 13 auf. Wenn nun der Fahrer ein manuelles Lenkmoment auf die Lenkhandhabe 3 aufbringt, so werden die beiden Räder 6a und 6b abhängig von der Drehrichtung zu einer Seite ausgelenkt. In dem in Fig. 2 dargestellten Zustand wurde die Lenkhandhabe 3 im Uhrzeigersinn so weit gedreht, bis das dem Bordstein 13 zugewandte Rad 6b in seinem vorderen Bereich an demselben anschlug. Um den Komfort für den Fahrer zu erleichtern, wurde diese Drehbewegung der Lenkhandhabe 3 in an sich bekannter Weise durch den elektrischen Servoantrieb 10 unterstützt, indem dieser ein elektrisches Lenkmoment auf die Zahnstange 8 aufgebracht hat. Selbstverständlich gilt dasselbe, wenn die Lenkhandhabe 3 in die andere Richtung gedreht wird und das Rad 6b in seinem hinteren Bereich an dem Borstein 13 anschlägt.

Wenn in diesem Zustand, in dem das Rad 6b an dem Bordstein 13 bzw. allgemein an einem festen Hindernis anschlägt, durch den Fahrer das manuelle Lenkmoment erhöht wird, so erhöht sich auch das elektrische Lenkmoment, um den Fahrer zu unterstützen. Hierbei ist das elektrische Lenkmoment umso höher, je höher das manuell über die Lenkhandhabe 3 aufgebrachte Lenkmoment ist. Dies kann aufgrund der ungünstigen Winkellage bei entsprechend hohen Momenten zu erheblichen Beschädigungen der Zahnstange 8 führen.

Aus diesem Grund wird gemäß der vorliegenden Erfindung in dem Zustand, in dem das gelenkte Rad 6b an dem Bordstein 13 anschlägt und der Fahrer eine hohe Kraft auf die Lenkhandhabe 3 aufbringt, bei Überschreiten einer bestimmten auf die Lenkhandhabe 3 aufgebrachten Kraft die elektrische Lenkunterstützung zeitlich verzögert reduziert. Auf diese Weise wirkt auf die Zahnstange 8 im wesentlichen nur noch die von dem Fahrer über die Lenkhandhabe 3 und die Lenksäule 4 auf dieselbe aufgebrachte Kraft, wohingegen die von dem Elektromotor 11 über das Riemengetriebe 12 auf die Zahnstange 8 wirkende Kraft sehr gering ist, so dass Beschädigungen der Zahnstange 8 aufgrund des erheblich verringerten gesamten Lenkmoments im wesentlichen ausgeschlossen werden können. Die Reduzierung der elektrischen Lenkunterstützung kann beispielsweise so erfolgen, dass das durch den Elektromotor 11 aufgebrachte Lenkmoment höchstens 60% des maximalen durch den Elektromotor 11 aufzubringenden Lenkmoments beträgt.

Das manuelle Lenkmoment, bei dessen Überschreiten die elektrische Lenkunterstützung reduziert wird, kann zwischen 5 und 15 Nm, insbesondere 7,5 Nm, betragen und mit einem nicht dargestellten, bereits vorhandenen Sensor gemessen werden. Manuelle Lenkmomente zwischen 5 und 15 Nm, insbesondere bis zu 7,5 Nm, können in der Praxis vorkommen, wohingegen eine Überschreitung dieses Bereichs bzw. Werts auf eine ungewöhnliche Situation, insbesondere auf den Missbrauchsfall "Bordsteinabdrücken" hindeutet.

Weitere Aspekte des Verfahrens, die die Wahrscheinlichkeit für ein unerwünschtes Reduzieren der elektrischen Lenkunterstützung verringern, bestehen darin, dass das Verfahren nur im stehenden Zustand des Kraftfahrzeugs 1 durchgeführt werden kann, dass es nur durchgeführt wird, wenn die Lenkgeschwindigkeit geringer als ein einstellbarer Wert ist, der zum Beispiel in einem Bereich von 100°/s liegen kann, und/oder dass es nur durchgeführt werden kann, wenn das an dem Bordstein 13 anschlagende Rad 6b von der Mitte nach außen gelenkt wird. Wie oben beschrieben, ist dies im vorliegenden Ausführungsbeispiel bei dem Rad 6b der Fall. Um ein nur kurzzeitiges Überschreiten des festgelegten maximalen manuellen Lenkmoments nicht zu berücksichtigen und eine zu starke Reaktion der elektrischen Hilfskraftlenkung 2 gegenüber dem Fahrer zu vermeiden, wird des weiteren vorgesehen, dass die Reduzierung der elektrischen Lenkunterstützung mit einer zeitlichen Verzögerung erfolgt. Diese zeitliche Verzögerung kann sich beispielsweise in einem Bereich von einer Sekunde bewegen.

In einer weiteren nicht von der vorliegenden Erfindung umfassten Ausführung des Verfahrens zum Verhindern einer Beschädigung der Zahnstange 8 durch zu hohe manuelle Lenkmomente kann vorgesehen sein, dass die elektrische Lenkunterstützung durch den elektrischen Servoantrieb 10 stets auf einen derart geringen Wert begrenzt wird, dass die Summe der auf die Lenkhandhabe 3 aufgebrachten Kraft und der durch die elektrische Lenkunterstützung aufgebrachten Kraft kleiner oder gleich einer zuvor festgelegten, zum Einparken benötigten Zahnstangenkraft ist.

Eine weitere erfindungsgemäße Ausführung Verfahren kann darin bestehen, dass der quasistatische Verlauf der elektrischen Lenkunterstützung stets auf einen derart geringen Wert begrenzt wird, dass höchstens die beim jeweiligen Lenkwinkel zum Einparken benötigte Zahnstangenkraft zur Verfügung steht.

Die beschriebenen Verfahren können in beliebiger Weise miteinander kombiniert werden, solange nicht offensichtliche Gründe gegen eine bestimmte Kombination sprechen.

### Bezugszeichen

- 1: Kraftfahrzeug
- 2: elektrische Hilfskraftlenkung
- 3: Lenkhandhabe
- 4: Lenksäule
- 5: Lenkgetriebe
- 6a,b: Rad
- 7a,b: Spurstange
- 8 9: Zahnstange Ritzel
- 10: elektrischer Servoantrieb
- 11: Elektromotor
- 12: Riemengetriebe
- 13: Bordstein

## Patentansprüche

1. Verfahren zum Betreiben einer elektrischen Hilfskraftlenkung bei einem Kraftfahrzeug, wobei ein über eine Lenkhandhabe eingeleitetes manuelles Lenkmoment über ein Lenkgetriebe zum Auslenken von Rädern des Kraftfahrzeugs auf dieselben übertragen wird, wobei das manuelle Lenkmoment durch einen Elektromotor unterstützt wird und bei Überschreiten eines bestimmten auf die Lenkhandhabe (3) aufgebrachten Lenkmoments in einem Zustand reduziert wird, in dem ein gelenktes Rad (6a, 6b) an einem festen Hindernis (13) anschlägt und ein Fahrer ein hohes Lenkmoment auf die Lenkhandhabe (3) aufbringt, wobei die Lenkunterstützung durch den Elektromotor (11) mit einer zeitlichen Verzögerung reduziert wird, **dadurch gekennzeichnet, dass** das Verfahren nur im stehenden Zustand des Kraftfahrzeugs (1) und nur wenn die Lenkgeschwindigkeit geringer als ein einstellbarer Wert ist, durchgeführt wird.

2. Verfahren zum Betreiben einer elektrischen Hilfskraftlenkung bei einem Kraftfahrzeug, wobei ein über eine Lenkhandhabe eingeleitetes manuelles Lenkmoment über ein Lenkgetriebe zum Auslenken von Rädern des Kraftfahrzeugs auf dieselben übertragen wird, wobei das manuelle Lenkmoment durch einen Elektromotor unterstützt wird und bei Überschreiten eines bestimmten auf die Lenkhandhabe (3) aufgebrachten Lenkmoments in einem Zustand reduziert wird, in dem ein gelenktes Rad (6a, 6b) an einem festen Hindernis (13) anschlägt und ein Fahrer ein hohes Lenkmoment auf die Lenkhandhabe (3) aufbringt, wobei die Lenkunterstützung durch den Elektromotor (11) mit einer zeitlichen Verzögerung reduziert wird, wobei das Verfahren nur im stehenden Zustand des Kraftfahrzeugs (1) und/oder nur wenn die Lenkgeschwindigkeit geringer als ein einstellbarer Wert ist, durchgeführt wird, **dadurch gekennzeichnet, dass** der quasistatische Verlauf der Lenkunterstützung durch den Elektromotor (11) stets auf einen derart geringen Wert begrenzt wird, dass höchstens die beim jeweiligen Lenkwinkel zum Einparken benötigte Zahnstangenkraft zur Verfügung steht.

## Claims

1. Method for operating an electric power steering system in a motor vehicle, wherein a manual steering torque which is applied via a steering handle is transmitted to wheels of the motor vehicle via a steering gear for deflecting said wheels, wherein the manual steering torque is assisted by an electric motor and is reduced when a specific steering torque which is applied to the steering handle (3) is exceeded in a state in which a steered wheel (6a, 6b) impacts against a fixed obstacle (13) and a driver applies a high steering torque to the steering handle (3), wherein the steering assistance is reduced by the electric motor (11) with a time delay, **characterized in that** the method is carried out only in the stationary state of the motor vehicle (1) and only if the steering speed is lower than an adjustable value.

2. Method for operating an electric power steering system in a motor vehicle, wherein a manual steering torque which is applied via a steering handle is transmitted to wheels of the motor vehicle via a steering gear for deflecting said wheels, wherein the manual steering torque is assisted by an electric motor and is reduced when a specific steering torque which is applied to the steering handle (3) is exceeded in a state in which a steered wheel (6a, 6b) impacts against a fixed obstacle (13) and a driver applies a high steering torque to the steering handle (3), wherein the steering assistance is reduced by the electric motor (11) with a time delay, wherein the method is carried out only in the stationary state of the motor vehicle (1) and/or only if the steering speed is lower than an adjustable value, **characterized in that** the quasi-static profile of the steering assistance is always limited by the electric motor (11) to a value which is so low that at most the toothed rack force which is required for parking given the respective steering angle is available.

## Revendications

1. Procédé pour faire fonctionner une direction assistée électrique, dans un véhicule automobile, un couple de direction manuel introduit par le biais d'un volant de direction étant transmis au véhicule par le biais d'un mécanisme de direction pour dévier les roues du véhicule, le couple de direction manuel étant assisté par un moteur électrique et en cas de dépassement d'un couple de direction défini appliqué sur le volant de direction (3), étant réduit dans un état dans lequel une roue dirigée (6a, 6b) bute contre un obstacle fixe (13) et un conducteur applique un couple de direction élevé au volant de direction (3), l'assistance à la direction par le moteur électrique (11) étant réduite avec un retard temporel, **caractérisé en ce que** le procédé n'est mis en œuvre qu'à l'arrêt du véhicule automobile (1) et/ou seulement lorsque la vitesse de direction est inférieure à une valeur ajustable.

2. Procédé pour faire fonctionner une direction assistée électrique, dans un véhicule automobile, un couple de direction manuel introduit par le biais d'un volant de direction étant transmis au véhicule par le biais d'un mécanisme de direction pour dévier les roues du véhicule, le couple de direction manuel étant assisté par un moteur électrique et en cas de dépassement d'un couple de direction défini appliqué sur le volant de direction (3), étant réduit dans un état dans lequel une roue dirigée (6a, 6b) bute contre un obstacle fixe (13) et un conducteur appliquant un couple de direction élevé au volant de direction (3), l'assistance à la direction par le moteur électrique (11) étant réduite avec un retard temporel, le procédé n'étant mis en œuvre qu'à l'arrêt du véhicule automobile (1) et/ou seulement lorsque la vitesse de direction est inférieure à une valeur ajustable, **caractérisé en ce que** l'allure quasiment statique de l'assistance à la direction par le moteur électrique (11) est toujours limitée à une valeur si petite que l'on dispose de la force de crémaillère nécessaire pour le stationnement pour chaque angle de direction respectif.
